# EUROPEAN PATENT APPLICATION

(11) **EP 4 844 929 A2**
(43) Date of publication of application: **25.11.2026**
(21) Application number: 26179883.9
(22) Date of filing: 24.06.2022
(51) Int. Cl.: H01M 50/429

(54) **SEPARATOR, PREPARATION METHOD THEREOF, AND RELATED SECONDARY BATTERY AND ELECTRICAL APPARATUS**

(62) Document number(s) of the earlier application(s) in accordance with Art. 76 EPC: 22936715.6 / 4 325 648
(71) Applicant: Contemporary Amperex Technology (Hong Kong) Limited, Hong Kong (HK)
(72) Inventor: XU, Ming, Ningde City, 352100 (CN); YANG, Jianrui, Ningde City, 352100 (CN); WEI, Manxiang, Ningde City, 352100 (CN)
(74) Representative: Gong, Jinping

(57) **Abstract**

The present application provides a separator for a secondary battery and a preparation method thereof, as well as a secondary battery and an electrical apparatus including the separator. The separator of the present application includes a porous substrate and a coating disposed on at least one surface of the porous substrate. The coating includes nanocellulose, the nanocellulose includes modifying groups, and the modifying groups include at least one of sulfonic acid groups, boric acid groups, and phosphoric acid groups.

## Description

### Technical Field

The present application relates to the technical field of secondary batteries, and specifically to a separator, a preparation method thereof and a related secondary battery and an electrical apparatus.

### Background Art

Secondary batteries are widely used in various consumer electronics and electric vehicles due to their outstanding characteristics including light weight, no pollution, and memoryless effect.

With the continuous development of the new energy industry, customers have put forward higher requirements for the use of secondary batteries. For example, the requirements for the safety performance of secondary batteries are getting higher and higher. However, the current methods for improving the safety performance of batteries are often not conducive to balancing the energy density of batteries.

Therefore, how to make the battery have both good safety performance and high energy density is the key challenge in the art.

### Summary of the Invention

In view of the problems existing in the prior art, the present application provides a separator, which features excellent heat-resistant stability, high ion conductivity, and good resistance to external force extrusion, so that a secondary battery using the separator can have both good safety performance and high energy density.

In order to achieve the above objective, the first aspect of the present application provides a separator, which includes: a porous substrate; and a coating disposed on at least one surface of the porous substrate; the coating includes nanocellulose, the nanocellulose includes modifying groups, and the modifying groups include at least one of sulfonic acid groups, boronic acid groups and phosphoric acid groups.

Compared with the prior art, the present application includes at least the following beneficial effects: the separator of the present application contains nanocellulose with specific modifying groups (such as at least one of sulfonic acid groups, boric acid groups, and phosphoric acid groups) in the coating. On the one hand, it can effectively improve the heat-resistant stability of the separator, thereby improving the thermal safety performance of the battery and hence improving the safety of the battery during use; on the other hand, the nanocellulose with modifying groups in the coating itself has a certain rigidity, which can not only ensure the bonding force with the substrate of the separator, but also ensure the efficiency of ion conduction and improve the resistance to external force extrusion of the separator, thereby improving the energy density and thermal stability of the battery. Also, the existence of the modifying groups reduces the proportion of hydroxyl groups in the raw material, so the viscosity of the coating slurry can be reduced, thereby reducing the difficulty of coating the slurry and improving coating uniformity, and further improving the production efficiency of the separator.

In any embodiment of the present application, the nanocellulose further includes hydroxyl groups, and the content ratio of the modifying groups to the hydroxyl groups is 1:4-4:1; for example, the ratio of the modifying groups to the hydroxyl groups is 2:3-7:3. When the ratio of the modifying groups to the unmodified hydroxyl groups on the nanocellulose is within the above range, the thermal stability and ion conduction capacity of the separator, and the thermal safety performance of the battery can be further improved.

In any embodiment of the present application, the average diameter of the nanocellulose is ≤40 nm; for example, the average diameter of the nanocellulose may be 10-35 nm. When the average diameter of the nanocellulose is within the above given range, the heat-resistant stability of the separator can be further improved, and the thermal shrinkage rate of the separator can be reduced.

In any embodiment of the present application, the average length of the nanocellulose may be 100-600 nm; for example, the average length of the nanocellulose may be 200-500 nm. When the average length of the nanocellulose is within the above given range, the ion conduction capacity of the separator can be further improved.

In any embodiment of the present application, the aspect ratio of the nanocellulose may be 5-60; for example, the aspect ratio of the nanocellulose may be 10-30. When the aspect ratio of the nanocellulose is within the given range above, the heat-resistant stability of the separator and the safety performance of the battery can be further improved.

In any embodiment of the present application, the equilibrium degree of polymerization of the nanocellulose may be 150-300 DP; for example, the equilibrium degree of polymerization of the nanocellulose is 200-250 DP. When the equilibrium degree of polymerization of the nanocellulose is within the above given range, it is more conducive to the viscosity of the nanocellulose solution to be in a reasonable range, and the fluidity and wettability of the slurry during coating are better, which is more conducive to improving the quality of the coating and can further improve the heat-resistant stability and ion conduction capacity of the separator.

In any embodiment of the present application, the molecular weight of the nanocellulose may be 20,000-60,000; for example, the molecular weight of the nanocellulose may be 30,000-50,000. When the molecular weight of the nanocellulose is within the above given range, not only can the nanocellulose be prevented from blocking the pore structure of the separator, but also the viscosity of the nanocellulose solution can be within a reasonable range, and the slurry has better fluidity and wettability when it is applied, which is more conducive to improving the quality of the coating, and can further improve the heat-resistant stability and ion conduction capacity of the separator.

In any embodiment of the present application, the shape of the nanocellulose is selected from one or more of the following: tubular, fibrous, and rod-shaped. Nanocellulose with a suitable shape is more conducive to building a stable spatial network structure by itself or with other components in the coating, which can further increase the ion conduction channels of the separator and improve the resistance to external force extrusion.

In any embodiment of the present application, the time when the separator leaks current at 65°C and 4.3V is ≥12 days. The separator with the above characteristics can ensure that electrons are intercepted at the end of the separator, avoiding short circuits or micro-short circuits caused by breakdown points, and further improving the safety of the battery during use.

In any embodiment of the present application, the content of nanocellulose in the coating can be ≥5 wt%; for example, the content of nanocellulose in the coating can be 5-30 wt%, optionally 10-25 wt%. When the content of nanocellulose in the coating is within the above given range, it can ensure that the coating slurry containing the nanocellulose has a more suitable viscosity, which is more conducive to coating; and it is more conducive to building a stable spatial network structure by the nanocellulose itself or with other components in the coating, can further increase the ion conduction channels of the separator, improve the ability to withstand external force extrusion and voltage breakdown, and further improve the thermal safety of the battery.

In any embodiment of the present application, the coating further includes a filler, and the filler includes at least one of inorganic particles, organic particles, and organic-inorganic hybrid particles.

In any embodiment of the present application, the inorganic particles can be at least one of inorganic particles with a dielectric constant of 5 or higher, inorganic particles capable of transporting active ions, and materials capable of electrochemical oxidation and reduction.

In any embodiment of the present application, the inorganic particles having a dielectric constant greater than or equal to 5 may be selected from at least one of boehmite (γ-AlOOH), aluminum oxide (Al₂O₃), barium sulfate (BaSO₄), magnesium oxide (MgO), magnesium hydroxide (Mg(OH)₂), silicon-oxygen compound SiOₓ(0<x≤2), tin dioxide (SnO₂), titanium oxide (TiO₂), calcium oxide (CaO), zinc oxide (ZnO), zirconia (ZrO₂), yttrium oxide (Y₂O₃), nickel oxide (NiO), hafnium dioxide (HfO₂), cerium oxide (CeO₂), zirconium titanate (ZrTiO₃), barium titanate (BaTiO₃), magnesium fluoride (MgF₂), Pb(Zr,Ti)O₃ (PZT), Pb₁₋ₓLaₓZr_{1-y}Ti_{y}O₃(PLZT), and PB(Mg₃Nb_{2/3})O₃-PbTiO₃ (PMN-PT).

In any embodiment of the present application, the inorganic particles capable of transporting active ions may be at least one of lithium phosphate (Li₃PO₄), lithium titanium phosphate (LiₓTi_{y}(PO4)₃, 0<x<2, 0<y< 3), lithium titanium aluminum phosphate (LiₓAl_{y}T_{z}(PO4)₃, 0<x<2, 0<y<1, 0<z<3), (LiAlTiP)ₓO_{y}type glass (0<x <4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ type glass (LiₓSi_{y}S_{z}, 0<x<3, 0<y<2, 0<z<4), P₂S₅ type glass (LiₓP_{y}S_{z}, 0<x<3, 0< y<3, 0<z<7).

In any embodiment of the present application, the material capable of electrochemical oxidation and reduction can be selected from at least one of lithium-containing transition metal oxides, olivine-structured lithium-containing phosphates, carbon-based materials, silicon-based materials, tin-based materials, lithium-titanium compounds.

In any embodiment of the present application, the organic particles can be selected from at least one of polystyrene, polyethylene, polyimide, melamine resin, phenolic resin, polypropylene, polyester, polyphenylene sulfide, polyaramide, polyamide-imide, polyimides, copolymers of butyl acrylate and ethyl methacrylate, and mixtures thereof.

In any embodiment of the present application, the organic-inorganic hybrid particles can be selected from metal-organic framework materials, such as MOF.

The presence of fillers in the coating can further build a stable spatial network structure together with nanocellulose in the coating, which can further increase the channels for ion conduction, and can further improve the thermal stability, oxidation resistance, puncture resistance and voltage breakdown resistance of the separator, thereby further improving the thermal safety performance of the battery.

In any embodiment of the present application, the volume average particle size Dv50 of the filler is ≤2.5 µm; for example, the volume average particle size Dv50 of the filler can be 0.3 µm-0.7 µm, 0.7 µm-1.5 µm, 1.5 µm -2.5 µm. When the particle size of the filler is controlled within the given range, the energy density of the battery can be further improved on the premise of ensuring good safety performance of the separator.

In any embodiment of the present application, the mass proportion of the filler in the coating is ≤ 95 wt% (based on the total mass of the coating); for example, the mass proportion of the filler in the coating can be 70-95 wt%, optionally 75-90 wt%. When the mass proportion of the filler is controlled within the given range, the energy density of the battery can be further improved on the premise of ensuring the safety performance of the separator.

In any embodiment of the present application, the thickness of the porous substrate is ≤ 12 µm, optionally the thickness of the porous substrate is ≤ 7 µm. When the thickness of the substrate is within the given range, the energy density of the battery can be further improved.

In any embodiment of the present application, the thickness of the coating is ≤ 3 µm, and the thickness of the coating is optionally 0.5-2 µm. When the thickness of the coating is within the given range, the energy density can be further improved on the premise of ensuring the safety performance of the battery.

In any embodiment of the present application, the thermal shrinkage rate of the separator at 150°C in 1 h is ≤5%, and optionally 0.5%-3%.

In any embodiment of the present application, the wetted length of the separator in 1 min is ≥20 mm, and optionally 30-80 mm.

In any embodiment of the present application, the release force of the separator is ≥0.5 N/m, and optionally 0.5-100 N/m.

In any embodiment of the present application, the transverse tensile strength (MD) of the separator is ≥2000 kgf/cm², and optionally 2500-4500 kgf/cm².

In any embodiment of the present application, the longitudinal tensile strength (TD) of the separator is ≥2000 kgf/cm², and optionally 2500-4500 kgf/cm².

In any embodiment of the present application, the air permeability of the separator is ≤300s/100ml, and optionally 100s/100ml-230s/100ml.

When the performance of the separator satisfies one or several of the above conditions, it is more conducive to improving the safety performance and energy density of the battery.

In any embodiment of the present application, at least a part of the surface of the coating is further provided with an adhesive layer, and the adhesive layer includes a granular organic binder; optionally, the granular organic binder includes a polyvinylidene fluoride-based polymer; further optionally, the polyvinylidene fluoride-based polymer includes a homopolymer of vinylidene fluoride monomers and/or includes a copolymer of vinylidene fluoride monomers with other comonomers; further optionally, the other comonomers include fluorine-containing monomers and/or chlorine-containing monomers.

The second aspect of the present application provides a preparation method of a separator, which includes the following steps: 1) providing a porous substrate; 2) providing a coating slurry: mixing modified nanocellulose in a solvent at a predetermined ratio to prepare the coating slurry; and 3) coating the coating slurry on at least one surface of the substrate, and drying to obtain a separator; the separator obtained after drying includes: a porous substrate and a coating disposed on at least one surface of the porous substrate, the coating including modified nanocellulose including modifying groups selected from at least one of sulfonic acid groups, boric acid groups and phosphoric acid groups.

In any embodiment of the present application, the modified nanocellulose is prepared as follows:
S1: preparing cellulose powder with whiteness ≥ 85%;
S2: mixing and reacting the cellulose powder in step S1 with an acid solution, then removing acids and impurities to obtain nanocellulose whiskers with modifying groups;
S3: adjusting the pH of the resulting nanocellulose whiskers with modifying groups to neutral, and grinding and cutting the nanocellulose whiskers to obtain the modified nanocellulose.

In any embodiment of the present application, in step S1, the cellulose powder can be obtained in the following manner: after opening and removing impurities from one or more fiber raw materials such as sisal fiber, cotton fiber, and wood fiber, the fiber raw material is cooked with an alkaline solution (such as aqueous NaOH solution at a concentration of 4-20 wt %, optionally 5-15 wt %), then washed to remove impurities, followed by bleaching (using sodium hypochlorite and/or hydrogen peroxide, etc.), acid washing to remove impurities, washing to remove impurities, water repelling, and air drying sequentially to obtain the cellulose powder.

In any embodiment of the present application, in step S2, the acid solution may be aqueous H₂SO₄ solution, aqueous H₃BO₃ solution, or aqueous H₃PO₄ solution, and the concentration of the acid solution may be 5-80 wt %.

In any embodiment of the present application, in step S2, the mass ratio of the cellulose powder to the acid solution may be 1:2.5-1:50, optionally 1:5-1:30.

In any embodiment of the present application, in step S2, the reaction may be performed at a temperature not higher than 80°C.

In any embodiment of the present application, in step S2, the reaction time of the cellulose powder with the acid solution may be 0.5-3 h.

The third aspect of the present application provides a secondary battery, which includes the separator of the first aspect of the present application or a separator prepared according to the preparation method of the second aspect of the present application. As mentioned above, the energy density and safety performance of the secondary battery of the present application are improved, while the preparation process has higher operability, and the production cost is greatly reduced.

The fourth aspect of the present application provides an electrical apparatus including the secondary battery of the third aspect of the present application.

In the separator of the present application, by coating the modified nanocellulose coating on the porous substrate, on the one hand, the heat-resistant stability of the separator can be effectively improved, thereby improving the safety performance of the battery during use; on the other hand, the nanocellulose with specific modifying groups in the coating has a certain rigidity, and it (or together with other components in the coating, such as fillers) can build a stable spatial network structure, which can increase the ion conduction channels and improve the resistance to external force extrusion, thereby improving the energy density and thermal safety of the battery. Also, the existence of the modifying groups reduces the proportion of hydroxyl groups in the raw material, so the viscosity of the coating slurry can be reduced, thereby reducing the difficulty of coating the slurry and improving the production efficiency of the separator.

### Description of Drawings

In order to more clearly illustrate the technical solutions of the present application, the drawings to be used in the present application will be briefly introduced below. Apparently, the drawings described below are merely some embodiments of the present application. For those of ordinary skills in the art, other drawings may also be obtained based on these drawings without making creative work.
Fig. 1 is a structural schematic diagram of a separator according to an embodiment of the present application.
Fig. 2 is a structural schematic diagram of a secondary battery according to an embodiment of the present application.
Fig. 3 is an exploded view of Fig. 2.
Fig. 4 is a structural schematic diagram of a battery module according to an embodiment of the present application.
Fig. 5 is a structural schematic diagram of a battery pack according to an embodiment of the present application.
Fig. 6 is an exploded view of Fig. 5.
Fig. 7 is a schematic diagram of a device using a secondary battery as a power source according to an embodiment of the present application.
Fig. 8 is a scanning electron microscopy (SEM) image of the cross section of a separator according to an embodiment of the present application.
Fig. 9 is a scanning electron microscopy (SEM) image of nanocellulose in the coating of a separator according to an embodiment of the present application.

### Detailed Description

Hereinafter, embodiments of the separator for use in secondary batteries, preparation method thereof, secondary battery, battery module, battery pack, and electrical apparatus of the present application are described in detail and specifically disclosed with reference to the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "range" disclosed in the present application is defined in terms of lower and upper limits, and a given range is defined by selecting a lower limit and an upper limit, which define the boundaries of a particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of the combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the "including" and "comprising" mentioned in the present application mean open-ended, or may be closed-ended. For example, the "including" and "comprising" may indicate that it is possible to include or comprise other components not listed, and it is also possible to include or comprise the only listed components.

Unless otherwise specified, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

In the description herein, it should be noted that, "above" and "below" are inclusive of the numerical numeral itself, and the meaning of "more" in "one or more" is two and more, unless otherwise specified.

Unless otherwise stated, the terms used herein have the well-known meanings commonly understood by those skilled in the art. Unless otherwise specified, the values of the parameters mentioned in the present application can be measured by various measurement methods commonly used in the art (for example, can be tested according to the methods given in the examples of the present application).

### Secondary battery

A secondary battery refers to a battery that can be used continually by activating an active material in a charging manner, after the battery is discharged. The secondary battery may include a lithium-ion secondary battery, a sodium-ion secondary battery and the like. The secondary battery of the present invention will be described in detail with the lithium ion secondary battery as an example.

Generally, the secondary battery includes a positive electrode plate, a negative electrode plate, a separator and an electrolyte. During the charging and discharging process of the battery, active ions are intercalated and deintercalated back and forth between the positive electrode plate and the negative electrode plate. The separator is provided between the positive electrode plate and the negative electrode plate and functions to separate. The electrolyte serves to conduct ions between the positive electrode plate and the negative electrode plate.

### [Separator]

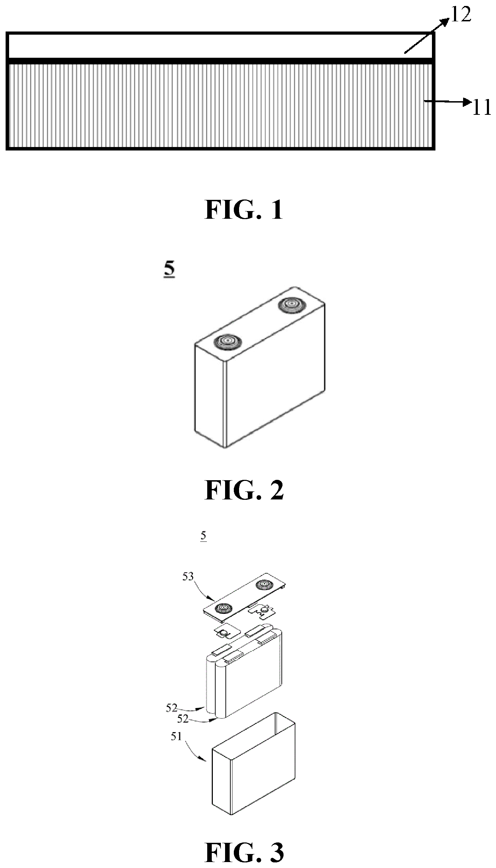

An embodiment of the present application provides a separator, which includes: a porous substrate; and a coating disposed on at least one surface of the porous substrate; the coating includes nanocellulose, the nanocellulose includes modifying groups, and the modifying groups include at least one of sulfonic acid groups, boronic acid groups and phosphoric acid groups. As shown in Fig. 1, it shows a structural schematic diagram of a separator with a coating 12 disposed on one surface of a porous substrate 11.

Without wishing to be bound by any theory, the inventors have found through extensive research that when at least one surface of the porous substrate of the separator is coated with a coating of nanocellulose containing specific modifying groups (including at least one of sulfonic acid groups, boric acid groups, and phosphoric acid groups), it can effectively improve the thermal stability of the separator (for example, significantly increase the hot box failure temperature of the battery, and/or significantly reduce the thermal shrinkage rate of the separator), which can significantly improve the safety performance of the secondary battery using the separator. On the other hand, when the coating contains nanocellulose with specific modifying groups, it can also effectively reduce the amount of flexible binder in the coating, so it can effectively increase the channels for ion conduction, thereby further improving the cycle life and capacity retention performance of the battery. Further, the existence of the specific modifying groups reduces the proportion of hydroxyl groups in the raw material, reduces the viscosity of the coating slurry, thereby reducing the difficulty of coating the slurry and also improving the production efficiency of the separator.

The types of modifying groups in the nanocellulose can be tested by infrared spectroscopy. For example, the infrared spectrum of the material can be tested to determine the characteristic peaks it contains, so as to determine the type of the modifying groups. Specifically, the materials can be analyzed by infrared spectroscopy using instruments and methods known in the art, such as infrared spectrometers, such as IS10 Fourier transform infrared spectrometers from Nicolet, according to GB/T6040-2002 General Rules for Infrared Analysis.

The inventor has found through in-depth research that, on the basis of the separator of the present application satisfying the aforementioned conditions, the performance of the secondary battery can be further improved if one or more of the following conditions can be satisfied optionally.

In some embodiments, the nanocellulose also includes hydroxyl groups, and the content ratio of the modifying groups to the hydroxyl groups is 1:4-4:1; for example, the ratio of the modifying groups to the hydroxyl groups is 2:3-7:3. When the ratio of the modifying groups to the unmodified hydroxyl groups on the nanocellulose is within the above range, the thermal stability and ion conduction capacity of the separator, and the thermal safety performance of the battery can be further improved.

In some embodiments, the average diameter of the nanocellulose is ≤40 nm; for example, the average diameter of the nanocellulose may be 10-35 nm. When the average diameter of the nanocellulose is within the above range, the heat-resistant stability of the separator can be further improved, and the thermal shrinkage rate of the separator can be reduced.

In some embodiments, the average length of the nanocellulose may be 100-600 nm; for example, the average length of the nanocellulose may be 200-500 nm. When the average length of the nanocellulose is within the above given range, the heat-resistant stability and ion conduction capacity of the separator can be further improved.

In some embodiments, the aspect ratio of the nanocellulose may be 5-60; for example, the aspect ratio of the nanocellulose may be 10-30. When the aspect ratio of the nanocellulose is within the above given range, the energy density of the battery can be further improved.

In some embodiments, the equilibrium degree of polymerization of the nanocellulose may be 150-300 DP; for example, the equilibrium degree of polymerization of the nanocellulose may be 200-250 DP. When the equilibrium degree of polymerization of the nanocellulose is within the above given range, it is more conducive to the viscosity of the nanocellulose solution to be in a reasonable range, and the fluidity and wettability of the slurry during coating are better, which is more conducive to improving the quality of the coating and can further improve the heat-resistant stability and ion conduction capacity of the separator.

In some embodiments, the molecular weight of the nanocellulose may be 20,000-60,000; for example, the molecular weight of the nanocellulose may be 30,000-50,000. When the molecular weight of the nanocellulose is within the above given range, not only can the nanocellulose be prevented from blocking the pore structure of the separator, but also the viscosity of the nanocellulose solution can be within a reasonable range, and the slurry has better fluidity and wettability when it is applied, which is more conducive to improving the quality of the coating, and can further improve the heat-resistant stability and ion conduction capacity of the separator.

In some embodiments, the shape of the nanocellulose is selected from one or more of the following: tubular, fibrous, and rod-shaped. Nanocellulose with a suitable shape is more conducive to building a stable spatial network structure by itself or together with other components in the coating, which can further increase the ion conduction channels and improve the resistance to external force extrusion.

In some embodiments, the time for the separator to leak current at 65°C and 4.3V is ≥12 days. The separator with the above characteristics can ensure that electrons are intercepted at the end of the separator, avoiding short circuits or micro-short circuits caused by breakdown points, and further improving the safety of the battery during use.

In some embodiments, the content of the nanocellulose in the coating can be ≥5 wt%; for example, the content of the nanocellulose in the coating can be 5-30 wt%, optionally 10-25 wt%. When the content of nanocellulose in the coating is within the above given range, it can be ensured that the coating slurry containing the nanocellulose has a more suitable viscosity, which is more conducive to coating; and it is more conducive to building a stable spatial network structure by the nanocellulose itself or together with other components in the coating, can further increase the ion conduction channels, improve the ability to withstand external force extrusion and voltage breakdown, and further improve the thermal safety of the battery.

In some embodiments, the coating further includes a filler, and the filler includes at least one of inorganic particles, organic particles, and organic-inorganic hybrid particles.

In some embodiments, the inorganic particles can be at least one of inorganic particles with a dielectric constant of 5 or higher, inorganic particles capable of transporting active ions, and materials capable of electrochemical oxidation and reduction.

In some embodiments, the inorganic particles having a dielectric constant greater than or equal to 5 may be selected from at least one of boehmite (γ-AlOOH), aluminum oxide (Al₂O₃), barium sulfate (BaSO₄), magnesium oxide ( MgO), magnesium hydroxide (Mg(OH)₂), silicon-oxygen compound SiOₓ(0<x≤2), tin dioxide (SnO₂), titanium oxide (TiO₂), calcium oxide (CaO), zinc oxide (ZnO), zirconium oxide (ZrO₂), yttrium oxide (Y₂O₃), nickel oxide (NiO), hafnium dioxide (HfO₂), cerium oxide (CeO₂), zirconium titanate (ZrTiO₃), barium titanate (BaTiO₃), magnesium fluoride (MgF₂), Pb(Zr,Ti)O₃ (PZT), Pb₁₋ₓLaₓZr_{1-y}Ti_{y}O₃(PLZT), and PB(Mg₃Nb_{2/3})O₃-PbTiO₃ (PMN-PT).

In some embodiments, the inorganic particles capable of transporting active ions may be at least one of lithium phosphate (Li₃PO₄), lithium titanium phosphate (LiₓTi_{y}(PO4)₃, 0<x<2, 0<y< 3), lithium titanium aluminum phosphate (LiₓAl_{y}T_{z}(PO4)₃, 0<x<2, 0<y<1, 0<z<3), (LiAlTiP)ₓO_{y} type glass (0<x <4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ type glass (LiₓSi_{y}S_{z}, 0<x<3, 0<y<2, 0<z<4), P₂S₅ type glass (LiₓP_{y}S_{z}, 0<x<3, 0< y<3, 0<z<7).

In some embodiments, the material capable of electrochemical oxidation and reduction can be selected from at least one of lithium-containing transition metal oxides, olivine-structured lithium-containing phosphates, carbon-based materials, silicon-based materials, tin-based materials, lithium-titanium compounds.

In some embodiments, the organic particles can be selected from at least one of polystyrene, polyethylene, polyimide, melamine resin, phenolic resin, polypropylene, polyester, polyphenylene sulfide, polyaramide, polyamide-imide, polyimides, copolymers of butyl acrylate and ethyl methacrylate, and mixtures thereof.

In some embodiments, the organic-inorganic hybrid particles can be selected from metal-organic framework materials, such as MOF.

The presence of fillers in the coating can further build a stable spatial network structure together with nanocellulose in the coating, which can further increase the channels for ion conduction, and can further improve the thermal stability, oxidation resistance, puncture resistance and voltage breakdown resistance of the separator, thereby further improving the safety performance of the battery.

In some embodiments, the volume average particle size Dv50 of the filler is ≤2.5 µm; for example, the volume average particle size Dv50 of the filler can be 0.3 µm-0.7 µm, 0.7 µm-1.5 µm, 1.5 µm -2.5 µm. When the particle size of the filler is controlled within the given range, the energy density of the battery can be further improved on the premise of ensuring good safety performance of the separator.

The volume average particle size Dv50 of filler is well known in the art, and can be determined by instruments and methods known in the art. For example, it can be measured by a laser particle size analyzer (such as Master Size 3000) with reference to GB/T 19077-2016 Particle Size Analysis -- Laser Diffraction Method.

In some embodiments, the mass proportion of the filler in the coating is ≤ 95 wt% (based on the total mass of the coating); for example, the mass proportion of the filler in the coating can be 70-95 wt%, optionally 75-90 wt%. When the mass proportion of the filler is controlled within the given range, the energy density of the battery can be further improved on the premise of ensuring the safety performance of the separator.

In some embodiments, the thermal shrinkage rate of the separator at 150°C in 1 h is ≤5%; for example, the thermal shrinkage rate of the separator at 150°C in 1 h may be 0.5%-3%.

In some embodiments, the wetted length of the separator in 1 min is ≥20 mm; for example, the wetted length of the separator in 1 min may be 30-80 mm.

In the present application, the wetted length of the separator in 1 min (reflecting the wetting performance of the separator to the electrolyte solution) is tested as follows: a) sample preparation: cutting the separator into samples with a width of 5 mm and a length of 100 mm (5 parallel samples), and bonding the two ends of the sample on a metal frame in parallel; b) formulation of electrolyte solution: well mixing ethylene carbonate (EC), ethyl methyl carbonate (EMC) and diethyl carbonate Ester (DEC) at a mass ratio of 3:5:2 to obtain a mixed solvent, and dissolving fully dried electrolyte salt LiPF₆ in the above mixed solvent at a concentration of 1.0 mol/L to obtain an electrolyte solution after mixing evenly; and c) pipetting the electrolyte solution into a dropper, dropping 0.5 mg toward the center of the sample strip, starting timing with a stopwatch, and after reaching the set time for 1 min, taking pictures and measuring the diffusion length of the electrolyte solution using a steel ruler and recording it as a, and averaging the measured values of the 5 samples.

In some embodiments, the release force of the separator is ≥0.5 N/m, and optionally 0.5-100 N/m.

In some embodiments, the transverse tensile strength (MD) of the separator is ≥ 2000 kgf/cm²; for example, the transverse tensile strength of the separator may be 2500-4500 kgf/cm².

In some embodiments, the longitudinal tensile strength (TD) of the separator is ≥ 2000 kgf/cm²; for example, the longitudinal tensile strength of the separator may be 2500-4500 kgf/cm².

In some embodiments, the air permeability of the separator is ≤300s/100mL; for example, the air permeability of the separator can be 100s/100mL-230s/100mL.

The release force, transverse tensile strength (MD), longitudinal tensile strength (TD) and air permeability of the separator all have meanings known in the art and can be measured by methods known in the art. For example, it can be tested with reference to the standard GB/T 36363-2018.

In some embodiments, the thickness of the coating is ≤ 3 µm, for example, the thickness of the coating can be 0.5 µm-1.0 µm, 1.0 µm-1.5 µm, 1.5 µm-2.0 µm.

In some embodiments, the coating weight per unit area of the separator is ≤ 3.0 g/m²; for example, the coating weight per unit area of the separator on one side can be 1.0 g/m²-1.5 g/m², 1.5 g/m²-2.5 g/m², 2.5 g/m²-3.0 g/m².

Controlling the coating thickness and/or coating weight within the above range can further increase the energy density of the battery on the premise of ensuring the safety performance of the battery.

It should be noted that the coating thickness and coating weight given above are within the control range of one-sided coating; if both surfaces of the porous substrate of the separator having coatings, the coating on either side meeting the above range is within the scope of the present application.

According to some embodiments, a non-granular binder may further be included in the coating. The type of the above non-granular binder is not particularly limited in the present application, and any well-known material with good improvement performance may be selected.

According to some embodiments, the above-mentioned non-granular binder accounts for less than 1% by mass in the coating.

In some embodiments, the coating may further include polymers for improving heat resistance, dispersants, wetting agents, and the like. The types of the above materials are not particularly limited in the present application, and any well-known material with good improvement performance may be used.

In the embodiments of the present application, there is no particular limitation on the material of the porous substrate, and any known substrate with good chemical stability and mechanical stability can be selected, such as one or more of glass fiber, non-woven fabric, polyethylene, polypropylene and polyvinylidene fluoride. The porous substrate may be a single-layer film or a multi-layer composite film. When the porous substrate is a multi-layer composite film, the materials of the layers may be the same or different.

In some embodiments, the thickness of the porous substrate is ≤12 µm; optionally, the thickness of the porous substrate is ≤7 µm, for example, the thickness of the porous substrate can be 3 µm-5 µm, 5 µm-9 µm, 9 µm-12 µm. When the thickness of the substrate is controlled within the given range, the energy density of the battery can be further improved on the premise of ensuring the safety performance of the battery.

In some embodiments, the porous substrate may have a porosity of 30%-60%. The porosity of the porous substrate is controlled within the above given range, which can ensure the discharge rate of the battery and prevent self-discharge.

In some embodiments, an adhesive layer is also provided on at least a part of the surface of the coating, and the adhesive layer includes a granular organic binder; optionally, the granular organic binder can include polyvinylidene fluoride-based polymers (PVDF-based polymers).

In some embodiments, PVDF-based polymers may include homopolymers of vinylidene fluoride monomers and/or copolymers including vinylidene fluoride monomers with other comonomers.

In some embodiments, other comonomers may include fluorine-containing monomers or chlorine-containing monomers. Optionally, the comonomer may include at least one of polyvinyl fluoride; trifluoroethylene (VF₃); hexafluoropropylene; chlorotrifluoroethylene (CTFE); 1,2-difluoroethylene; tetrafluoroethylene (TFE); hexafluoropropylene (HFP); perfluoro(alkylvinyl)ethers such as perfluoro(methylvinyl)ether (PMVE), perfluoro(ethylvinyl)ether (PEVE) and perfluoro(propylvinyl)ether (PPVE); perfluoro(1,3-dioxole); and perfluoro(2,2-dimethyl-1,3-dioxole) (PDD).

The present application further provides a preparation of a separator, which includes the following steps:
1) providing a porous substrate;
2) providing a coating slurry: mixing the modified nanocellulose in a solvent at a predetermined ratio to prepare into the coating slurry;
3) coating the coating slurry on at least one surface of the substrate, and drying to obtain a separator;
wherein, the separator obtained after drying includes: a porous substrate and a coating disposed on at least one surface of the porous substrate, the coating including modified nanocellulose including modifying groups selected from at least one of sulfonic acid groups, boronic acid groups and phosphoric acid groups.

In the embodiments of the present application, there is no particular limitation on the material of the porous substrate, and any known substrate with good chemical stability and mechanical stability can be selected, such as one or more of glass fiber, non-woven fabric, polyethylene, polypropylene and polyvinylidene fluoride. The porous substrate may be a single-layer film or a multi-layer composite film. When the porous substrate is a multi-layer composite film, the materials of the layers may be the same or different.

In some embodiments, in step 2), the solvent may be water, such as deionized water.

In some embodiments, in step 2), the coating slurry further includes fillers, and the types of the fillers are as described above, and will not be repeated here. Optionally, the filler accounts for less than 95 wt% of the dry weight of the coating slurry; for example, it may be 70-95 wt%, 75-90 wt%.

In some embodiments, in step 2), the coating slurry may further include a heat resistance-improving polymer, a dispersant, a wetting agent, an emulsion-like binder, and the like.

In some embodiments, in step 2), the solid content of the coating slurry may be controlled at 28%-45%, for example, 30%-38%, by weight. When the solid content of the coating slurry is within the above range, the film surface problems of the coating and the probability of uneven coating can be effectively reduced, thereby further improving the energy density and safety performance of the battery.

In some embodiments, the modified nanocellulose in step 2) is prepared as follows:
S1: preparing cellulose powder with whiteness ≥ 85%;
S2: mixing and reacting the cellulose powder in step S1 with an acid solution, then removing acids and impurities to obtain nanocellulose whiskers with modifying groups;
S3: adjusting the pH of the resulting nanocellulose whiskers with modifying groups to neutral, and grinding and cutting the nanocellulose whiskers to obtain the modified nanocellulose.

In any embodiment of the present application, in step S1, the cellulose powder may be commercially available, or can be prepared in the following manner: after opening and removing slag from one or more fiber raw materials such as sisal fiber, cotton fiber, and wood fiber, the fiber raw material is cooked with an alkaline solution (such as aqueous NaOH solution with a concentration of 4-20 wt %, optionally 5-15 wt %), then washed to remove impurities, followed by bleaching (using sodium hypochlorite and/or hydrogen peroxide, etc.), acid washing to remove impurities, washing to remove impurities, water repelling, and air drying sequentially to obtain the cellulose powder.

In any embodiment of the present application, the fiber raw material may include at least one of plant fiber, such as cotton fiber (such as cotton fiber, kapok fiber), bast fiber (such as sisal fiber, ramie fiber, jute fiber, flax fiber, hemp fiber, abaca fiber), palm fiber, wood fiber, bamboo fiber, and grass fiber, preferably cotton fiber.

In any embodiment of the present application, in step S2, the acid solution may be aqueous H₂SO₄ solution, aqueous H₃BO₃ solution, or aqueous H₃PO₄ solution, and the concentration of the acid solution may be 5-80 wt %.

When the aqueous H₂SO₄ solution is selected, the concentration of the acid solution may be 40-80 wt %.

When the aqueous H₃BO₃ solution is selected, the concentration of the acid solution may be 5-10 wt %.

When the aqueous H₃PO₄ solution is selected, the concentration of the acid solution may be 45-75 wt %.

In any embodiment of the present application, in step S2, the mass ratio of the cellulose powder to the acid solution may be 1:2.5-1:50, optionally 1:5-1:30.

When the aqueous H₂SO₄ solution is selected, the mass ratio of the cellulose powder to the acid solution may be 1:5-1:30.

When the aqueous H₃BO₃ solution is selected, the mass ratio of the cellulose powder to the acid solution may be 1:20-1:50.

When the aqueous H₃PO₄ solution is selected, the mass ratio of the cellulose powder to the acid solution may be 1:5-1:30.

In any embodiment of the present application, in step S2, the reaction may be performed at a temperature not higher than 80°C, optionally 30-60°C.

In any embodiment of the present application, in step S2, the reaction time of the cellulose powder with the acid solution may be 0.5-3 h, optionally 1-2.5 h.

In some embodiments, in step 3), the coating is implemented using a coater.

In the embodiments of the present application, there is no special limitation on the model of the coater, and a commercially available coater can be used.

In some embodiments, in step 3), the coating may be implemented using techniques such as transfer coating, spin spray coating, and dip coating.

In some embodiments, the coater includes a gravure roller; the gravure roller is used to transfer the coating slurry onto the porous substrate.

In some embodiments, in step 3), the coating speed can be controlled at 30 m/min-120 m/min, such as 60 m/min-90 m/min. When the coating speed is within the above range, the film surface problems of the coating and the probability of uneven coating can be effectively reduced, thereby further improving the energy density and safety performance of the battery.

In some embodiments, in step 3), the line speed ratio of coating can be controlled at 0.8-2.5, such as 0.8-1.5, 1.0-1.5.

In some embodiments, in step 3), the drying temperature may be 40°C-70°C, for example, 50°C-60°C.

In some embodiments, in step 3), the drying time may be 10s-120s, for example, 20s-80s, 20s-40s.

Controlling the above-mentioned process parameters within the given ranges can further improve the performance of the separator of the present application. Those skilled in the art can selectively adjust one or more of the above process parameters according to actual production conditions.

The above-mentioned porous substrates, fillers, cellulose powder, fiber raw materials, non-granular binders, etc. are all commercially available.

According to the preparation method of the separator in the embodiments of the present application, the coating is obtained by a single coating, which greatly simplifies the production process of the separator; at the same time, the separator prepared by the above method is used in the battery, which can effectively improve the energy density of the battery and the thermal safety performance of the battery.

### [Positive electrode plate]

In the secondary battery, the positive electrode plate typically includes a positive electrode current collector and a positive electrode film layer provided on the positive electrode current collector, wherein the positive electrode film layer includes a positive electrode active material.

The positive electrode current collector can be a conventional metal foil or a composite current collector (a metal material can be placed on a polymer substrate to form a composite current collector). As an example, an aluminum foil can be used as the positive electrode current collector.

There is no particular limitation on the type of the positive electrode active material, and an active material that can be used for the positive electrode of the secondary battery as known in the art can be used and can be selected by those skilled in the art according to actual requirements.

As an example, the positive electrode active material may include, but is not limited to, one or more of lithium-containing transition metal oxides, lithium-containing phosphates and their respective modified compounds. Examples of the lithium-containing transition metal oxide may include, but are not limited to, one or more of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide, and modified compounds thereof. Examples of the lithium-containing phosphate may include, but are not limited to, one or more of lithium iron phosphate, composites of lithium iron phosphate and carbon, lithium manganese phosphate, composites of lithium manganese phosphate and carbon, lithium manganese iron phosphate, composites of lithium manganese iron phosphate and carbon, and modified compounds thereof. These materials are all commercially available.

The modified compounds of the above materials can be those obtained by modifying the materials by doping and/or surface coating.

The positive electrode film layer usually also optionally includes a binder, a conductive agent and other optional adjuvants.

By way of example, the conductive agent may be one or more of superconducting carbon, acetylene black, carbon black, Ketjen black, carbon dot, carbon nanotube, Super P (SP), graphene, and carbon nanofiber.

As an example, the binder may be one or more of styrene butadiene rubber (SBR), water-based acrylic resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

### [Negative electrode plate]

In the secondary battery, the negative electrode plate typically includes a negative electrode current collector and a negative electrode film layer provided on the negative electrode current collector, wherein the negative electrode film layer includes a negative electrode active material.

The negative electrode current collector can be a conventional metal foil or a composite current collector (for example, a metal material can be placed on a polymer substrate to form a composite current collector). As an example, a copper foil can be used as the negative electrode current collector.

There is no particular limitation on the type of the negative electrode active material, and an active material that can be used for the negative electrode of the secondary battery as known in the art can be used and can be selected by those skilled in the art according to actual requirements. As an example, the negative electrode active material may include, but is not limited to, one or more of artificial graphite, natural graphite, hard carbon, soft carbon, silicon-based material and tin-based material. The silicon-based material can be selected from one or more of elemental silicon, a silicon-oxygen compound (e.g., silicon monoxide), a silicon-carbon composite, a silicon-nitrogen composite and silicon alloy. The tin-based material may be selected from one or more of elemental tin, a tin oxygen compound and a tin alloy. These materials are all commercially available.

In some embodiments, in order to further increase the energy density of the battery, the negative electrode active material may include a silicon-based material.

The negative electrode film layer usually also optionally includes a binder, a conductive agent and other optional adjuvants.

By way of example, the conductive agent may be one or more of superconducting carbon, acetylene black, carbon black, Ketjen black, carbon dot, carbon nanotube, graphene, and carbon nanofiber.

As an example, the binder may be one or more of styrene butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, other optional adjuvants may be thickeners and dispersing agents (e.g., sodium carboxymethyl cellulose (CMC-Na)), PTC thermistor material.

### [Electrolyte solution]

The secondary battery can include an electrolyte solution, and the electrolyte solution serves to conduct ions between the positive electrode and the negative electrode. The electrolyte solution can include an electrolyte salt and a solvent.

As an example, the electrolyte salt may be selected from one or more of lithium hexafluorophosphate (LiPF6), lithium tetrafluoroborate (LiBF4), lithium perchlorate (LiClO4), lithium hexafluoroarsenate (LiAsF6), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO2F2), lithium difluoro bis(oxalato)phosphate (LiDFOP) and lithium tetrafluoro(oxalato)phosphate (LiTFOP).

As an example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) and diethyl sulfone (ESE).

In some embodiments, additives may also be included in the electrolyte solution. For example, the additive may include a negative electrode film-forming additive, or may include a positive electrode film-forming additive, and may further include an additive capable of improving certain performances of the battery, such as an additive for improving the overcharging performance of the battery, an additive for improving the high temperature performance of the battery, an additive for improving the low temperature performance of the battery.

In some embodiments, the secondary battery may be a lithium-ion secondary battery or sodium-ion secondary battery.

The examples of the present application has no particular limitation on the shape of the secondary battery, which can be cylindrical, square or any other shape. Fig. 2 shows a secondary battery 5 with a square structure as an example.

In some embodiments, the secondary battery may include an outer package. This outer package is used to encapsulate the positive electrode plate, the negative electrode plate, and the electrolyte.

In some embodiments, referring to Fig. 3, the outer package may include a case 51 and a cover plate 53. Here, the case 51 can include a bottom plate and a side plate connected to the bottom plate, with the bottom plate and the side plate enclosing to form an accommodating cavity. The case 51 has an opening that communicates with the accommodating cavity, and the cover plate 53 may cover the opening to close the accommodating cavity.

The positive electrode plate, the negative electrode plate, and the separator may be formed into an electrode assembly 52 by a winding process or a stacking process. The electrode assembly 52 is encapsulated within the accommodating cavity. The electrolyte can be an electrolyte solution, and the electrolyte solution impregnates the electrode assembly 52. The number of electrode assemblies 52 contained in the secondary battery 5 can be one or more, and can be adjusted according to requirements.

In some embodiments, the outer package of the secondary battery may be a hard shell, such as a hard plastic shell, an aluminum shell, a steel shell. The outer package of the secondary battery may also be a soft pack, such as a bag-type soft pack. The material of the soft package can be plastic, and for example may include one or more of polypropylene (PP), polybutylene terephthalate (PBT), and polybutylene succinate (PBS).

In some embodiments, secondary batteries may be assembled into a battery module, a plurality of secondary batteries may be contained in the battery module, and the specific number of secondary batteries can be adjusted according to the application and capacity of the battery module.

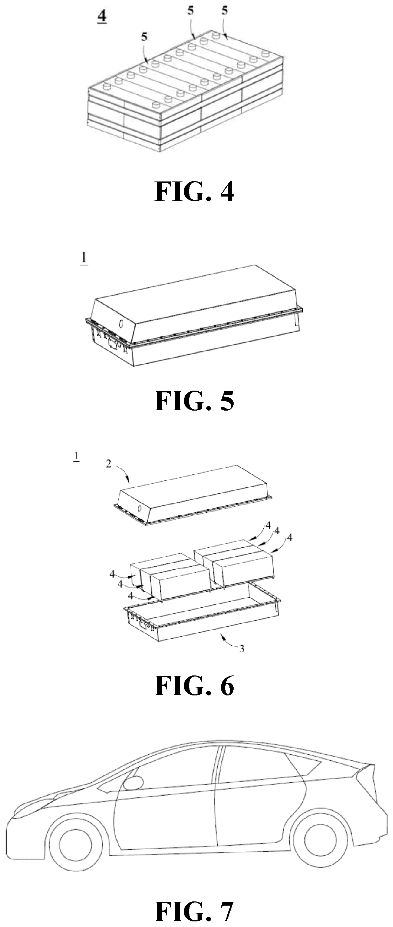

Fig. 4 shows a battery module 4 as an example. Referring to Fig. 4, in the battery module 4, multiple secondary batteries 5 may be sequentially arranged along a length direction of the battery module 4. Of course, they can be arranged in any other way. The multiple secondary batteries 5 can be further fixed by fasteners.

The battery module 4 may further include a shell having an accommodating space, in which the plurality of secondary batteries 5 are accommodated.

In some embodiments, the above-mentioned battery modules can further be assembled into a battery pack, and the number of battery modules contained in the battery pack can be adjusted according to the application and capacity of the battery pack.

Figs. 5 and 6 show a battery pack 1 as an example. Referring to Figs. 5 and 6, the battery pack 1 may include a battery box and a plurality of battery modules 4 provided in the battery box. The battery box includes an upper box 2 and a lower box 3, the upper box 2 can cover the lower box 3 to form a closed space for accommodating the battery modules 4. The plurality of battery modules 4 may be arranged in the battery box in any manner.

### Electrical apparatus

The present application further provides an electrical apparatus, and the electrical apparatus includes at least one of the secondary battery, the battery module, or the battery pack. The secondary battery, battery module, or battery pack may be used as a power source for the electrical apparatus, and may also be used as an energy storage unit for the electrical apparatus. The electrical apparatus may be, but is not limited to, a mobile device (e.g., a mobile phone, a laptop), an electric vehicle (e.g., an all-electric vehicle, a hybrid electric vehicle, a plug-in hybrid electric vehicle, an electric bicycle, an electric scooter, an electric golf cart, an electric truck), an electric train, a ship, a satellite, an energy storage system.

For the electrical apparatus, the secondary battery, the battery module, or the battery pack can be selected according to the use requirements of the electrical apparatus.

Fig. 7 shows an electrical apparatus as an example. The electrical apparatus is a all-electric vehicle, a hybrid electric vehicle or a plug-in hybrid electric vehicle. In order to meet the requirements of the electrical apparatus for high power and high energy density of secondary batteries, a battery pack or a battery module may be used.

As another example, the electrical apparatus may be a mobile phone, a tablet, a laptop. The electrical apparatus is generally required to be light and thin, and can use a secondary battery as a power source.

The beneficial effects of the present application are further illustrated below in conjunction with the examples.

### Examples

In order to make the technical problems to be solved by, and the technical solutions and beneficial effects of the embodiments of the present application more clear, further description will be made in detail below with reference to examples and the drawings. Apparently, the described examples are only some of the examples of the present application, not all of them. The following description of at least one exemplary embodiment is merely illustrative in nature and in no way serves as any limitation on the present application and its applications. Based on the examples in the present application, all other examples obtained by those of ordinary skill in the art without creative effort fall within the protection scope of the present application.

### I. Preparation of modified nanocellulose

### 1. Preparation of acid-modified cellulose

### S1. Preparation of cellulose powder:

After the cotton linters were opened to remove slag by a cotton opener, they were cooked with 5 wt%-NaOH aqueous solution, and then subjected to washing for 3-6 times for removing impurities, bleaching with sodium hypochlorite, pickling for removing impurities, washing for removing impurities, water repelling, and air drying sequentially to obtain cotton cellulose powder with whiteness ≥ 85%.

### S2. Esterification of cellulose:

1 kg of cotton cellulose powder obtained in step S1 was mixed with 30 kg of sulfuric acid solution (concentration: 60 wt%), allowed to react for 2 h at a temperature of 60°C; after the reaction, the reaction mixture was added with water for 3 times and filtered to remove acids and impurities, thereby obtaining nanocellulose whiskers with sulfonated groups.

### S3. Neutralization of cellulose:

First, the nanocellulose whiskers substituted by sulfonated groups were adjust to have a neutral pH using 10% NaOH aqueous solution, then dispersed using a grinder at high speed for 2.5 h, and then subjected to nanoscale cutting using high-pressure homogenizer equipment to obtain nanocellulose with sulfonic acid groups as the modifying groups. By adjusting the treatment parameters of the grinding mill (such as the times of grinding, as shown in Table 1 below) and the cutting parameters of the high-pressure homogenizer equipment, modified nanocellulose with different average diameters, different average lengths and different aspect ratios can be obtained, and the modified nanocellulose was formulated with water to prepare a modified nanocellulose solution with a suitable concentration for later use.

According to the same procedure as above, nanocellulose solutions modified by boric acid groups, phosphoric acid groups, and carboxyl groups were also prepared, and the only difference is that in the preparation of nanocellulose modified with boric acid groups, boric acid with a concentration of 7 wt% was used for acidification, other reaction conditions remained unchanged; in the preparation of nanocellulose modified with phosphoric acid groups, 70 wt% phosphoric acid was used for acidification, other reaction conditions remained unchanged; in the preparation of carboxy-modified nanocellulose, 60 wt% acetic acid was used for acidification, and other reaction conditions remained unchanged.

### 2. Preparation of alkali-modified cellulose

### S1. Preparation of cellulose powder:

After the cotton linters were opened by a cotton opener to remove slag, they were boiled with 5 wt% NaOH aqueous solution, and then subjected to washing for 3 times for removing impurities, bleaching with sodium hypochlorite, pickling for removing impurities, washing for removing impurities, water repelling, and air drying sequentially to obtain cellulose powder with whiteness ≥ 85%. At 10°C, the cellulose powder was mixed with 20 wt% sodium hydroxide aqueous solution at a certain ratio, stirred for 2 h, filtered and washed twice with water to obtain cellulose powder.

### S2. Preparation of cellulose carbamate:

50 g of the alkali cellulose powder obtained in step S1 and 200 g of urea were put into a three-port reactor with an oil-water separator, heated to 137°C, and stirred for 4 h; after the urea was dissolved, a certain amount of xylene (5 g) was added, and the reaction mixture was washed 3 times with water after the reaction, and filtered to obtain cellulose carbamate.

### S3. Neutralization of cellulose sulfate:

The cellulose carbamate obtained in S2 was dissolved in a proper proportion of 5 wt% NaOH solution to obtain a uniform cellulose carbamate solution, which was then dispersed using a grinder at high speed for 2.5 h, and then subjected to nanoscale cutting using high-pressure homogenizer equipment to obtain nanocellulose with amino groups as the modifying groups. By adjusting the treatment parameters of the grinding mill (such as the times of grinding, as shown in Table 1 below) and the cutting parameters of the high-pressure homogenizer equipment, modified nanocellulose with different average diameters, different average lengths and different aspect ratios can be obtained, and the modified nanocellulose was formulated with water to prepare a modified nanocellulose solution with a suitable concentration (such as 4.5 wt%) for later use.

The content ratio of modifying groups to hydroxyl groups in the resulting nanocellulose with modifying groups was measured by the following method: Testing was carried out according to the phthalic anhydride method in the international standard GB/T12008.3-2009 to obtain the hydroxyl value (the number of milligrams of potassium hydroxide equivalent to the hydroxyl content in each gram of sample) of each of the raw material cellulose and the modified nanocellulose is in mg KOH/g, which can be converted into mmol/g as the hydroxyl content. The surface hydroxyl content of the modified nanocellulose was subtracted from the hydroxyl content of the raw cellulose to obtain the content of the modifying groups (that is, the content of the modified hydroxyl groups).

### II. Preparation of separator

### Separator 1:

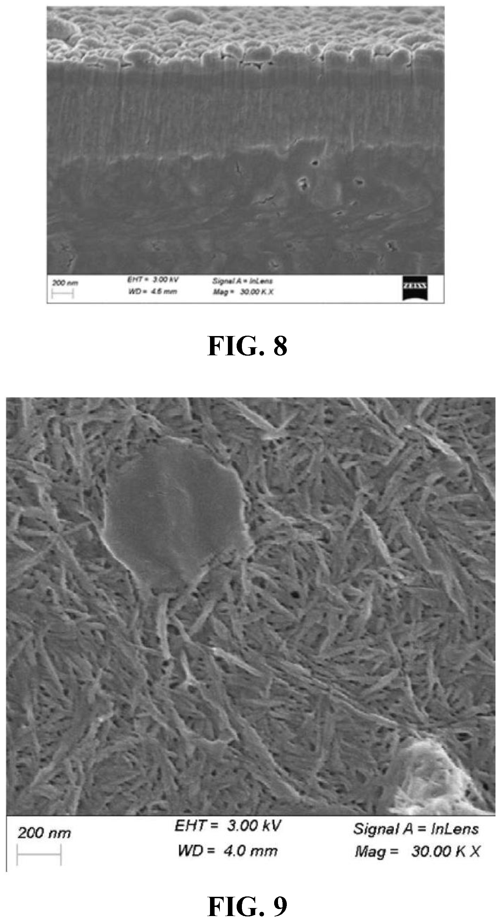

1) Providing a PE substrate, for example, one with a thickness of 5 µm, and a porosity of 37%.
2) Preparing coating slurry: filler aluminum oxide (Al₂O₃), modified nanocellulose, and watersoluble non-granular binder polyacrylate were well mixed at a dry weight ratio of 79.2:20:0.8 in an appropriate amount of solvent deionized water to obtain a coating slurry. Among others, the types of modifying groups contained in the modified nanocellulose, the ratio of modifying groups to hydroxyl groups, and the average diameter, average length, and average aspect ratio of the nanocellulose are shown in Table 1 below.
(3) Applying the coating slurry prepared in step 2) on the two surfaces of the PE substrate with a coater to obtain a separator 1 through drying and cutting processes. The thickness of the single-side coating is 2 µm, and the weight of the single-side coating per unit area of the separator is 1.0 g/m². Fig. 8 shows a scanning electron microscopy (SEM) image of a partial cross-section of the prepared separator 1, and Fig. 9 shows a scanning electron microscopy (SEM) image of nanocellulose in the coating of the resulting separator 1. It can be seen that the nanocellulose in the coating forms a network structure.

All materials used in the examples are commercially available. For example:
The PE substrate can be purchased from Shanghai Enjie New Material Co., Ltd.

Inorganic particles can be purchased from Estone Materials Technology Co., Ltd.

In addition, unmodified cellulose powder with whiteness ≥ 85% can also be purchased from Xi'an North Huitian Chemical Industries Co., Ltd., or prepared according to the above method.

Separators 2-24 are prepared by methods similar to the preparation method for separator 1, the difference is that: the type of the modifying groups contained in the modified nanocellulose, the content ratio of the modifying groups to the hydroxyl groups, and the average diameter, average length and average aspect ratio of the nanocellulose are adjusted. See Table 1 for details.

The length and diameter of the modified nanocellulose in the coating of the separator were measured by the following method: the microscopic structure of the nanocellulose in the coating sample was detected and plotted using ZEISS Sigma300 scanning electron microscope (SEM) with a high vacuum mode, a work voltage of 3kV, a magnification factor of 30,000 times. According to the SEM photographs, 5 data were selected and averaged, and the average length of the modified nanocellulose was measured. Based on the SEM photographs, calculation was carried out using the Nano Measurer particle size distribution statistical software, and 20 data were selected and averaged to obtain the average diameter of the modified nanocellulose.

### III. Preparation of secondary battery

### Example 1

### 1. Preparation of positive electrode plate

The positive electrode active material LiNi_{0.8}Co_{0.1}Mn_{0.1}O₂ (NCM811), the conductive agent carbon black (Super P) and the binder polyvinylidene fluoride (PVDF) at a mass ratio of 96.2: 2.7: 1.1 were evenly mixed in a proper amount of solvent N-methyl pyrrolidone (NMP) to obtain a positive electrode slurry. The positive electrode slurry was evenly coated on a aluminum foil as the positive electrode current collector, and then subjected to oven drying, cold pressing, slitting and cutting processes to obtain a positive electrode plate. The surface density of the positive electrode is 0.207 mg/mm², and the compacted density is 3.5 g/cm³.

### 2. Preparation of negative electrode

The negative electrode active material artificial graphite, conductive agent carbon black (Super P), binder styrene butadiene rubber (SBR), and sodium carboxymethyl cellulose (CMC-Na) at a mass ratio of 96.4: 0.7: 1.8: 1.1 were well mixed in a proper amount of solvent deionized water to obtain a negative electrode slurry; the negative electrode slurry was coated on the negative electrode current collector copper foil, and then oven dried, cold pressed, slit and cut to obtain a negative electrode plate. The surface density of the negative electrode is 0.126 mg/mm², and the compacted density is 1.7 g/cm³.

### 3. Separator

The separator adopts the separator 1 prepared as described above.

### 4. Preparation of electrolyte solution

Ethylene carbonate (EC) and ethyl methyl carbonate (EMC) at a mass ratio of 30:70 were mixed to obtain an organic solvent. The fully dried electrolyte salt LiPF₆ was dissolved in the above mixed solvent, the concentration of the electrolyte salt was 1.0 mol/L. An electrolyte solution was obtained after mixing evenly.

### 5. Preparation of secondary battery

The positive electrode plate, the separator and the negative electrode plate were stacked sequentially, so that the separator was positioned between the positive electrode plate and the negative electrode plate to separate them, and then wound to obtain an electrode assembly. The electrode assembly was placed in an outer package, the electrolyte solution prepared above was injected into the dried secondary battery. Vacuum packaging, standing, formation, shaping procedures were carried out to obtain a secondary battery.

The preparation method of the secondary batteries of Examples 2-21 and Comparative Examples 1-3 is similar to that of the secondary battery of Example 1, except that different separators are used. See Table 1 for details (note: when adjusting the content of nanocellulose in the coating, the content of the binder can be kept constant, and the content of the filler can be adjusted simultaneously).

### IV. Separator and battery performance test

### 1. Test of thermal shrinkage rate of the separator

1) Sample preparation: Separator samples with a width of 50 mm and a length of 100 mm were punched with a punch press, 5 parallel samples were taken, placed on A4 paper, and fixed. The A4 paper with the sample was placed onto corrugated paper that was 1-5 mm thick.
2) Sample test: The A4 paper placed on top of the corrugated paper was put into a blast oven, the temperature of the blast oven was set at 150°C, and after the temperature reached the set temperature and kept stable for 30 min, timing was started. When the set time was reached, the length and width of the separator were measured, and their values were marked as a and b respectively.
3) Calculation of thermal shrinkage rate:$Longitudinal shrinkage rate A = \left(100-a\right) / 100 ∗ 100 % ;$$Transverse shrinkage rate B = \left(50-b\right) / 50 ∗ 100 % ;$

The values of A and B were recorded respectively, and the measured values of 5 samples were averaged.

### 2. Detection of the time of leakage current of the separator under the conditions of 65°C and 4.3V

1) Discharging to 2.8V at a constant current of 0.2C;
2) Standing still for 30 min;
3) Under the initial current of 0.5C, after charging to 4.3V at constant current, charging at constant voltage to a current of 0.05C;
4) Standing still for 30 min;
5) Under the initial current of 0.2C, after charging to 4.3V at constant current, charging at constant voltage to a current of 0.02C;
6) In the constant voltage charging stage with an initial current of 0.02C, keeping the voltage at 4.3V, maintaining it for 120 days, monitoring and recording the current until occurrence of leakage current;
7) At the end of the test, recording the time when the separator leaks current.

### 3. Test of wetting performance of separator

1) Preparation of sample strips: Separator samples with a width of 5 mm and a length of 100 mm were cut using a cutting machine, 5 parallel samples were prepared, and the two ends of the sample were bonded on a metal frame in parallel.
2) Formulation of electrolyte solution: Ethylene carbonate (EC), ethyl methyl carbonate (EMC) and diethyl carbonate (DEC) were mixed at a mass ratio of 3:5:2 to obtain a mixed solvent, and fully dried electrolyte salt LiPF₆ was dissolved in the above mixed solvent, the concentration of the electrolyte salt being 1.0mol/L; an electrolyte solution was obtained after uniform mixing.
3) Wetting test: 0.5 mg of the prepared electrolyte solution was taken, dropped on the center of the sample strip fixed on the metal frame, and timing was started. After reaching the set time for 1 min, photos were taken and the diffusion length of the electrolyte solution was measured, which was marked as a. The results obtained from 5 samples were averaged.

### 4. Secondary battery hot box test

At 25°C, the secondary batteries prepared in the examples and comparative examples were charged at a constant current rate of 1C to a charging cut-off voltage of 4.2V, then charged at a constant voltage to a current ≤ 0.05C, and left to stand for 5 min. Then, the batteries were tested in a DHG-9070A DHG-series high-temperature oven with a fixture, and the temperature was increased from room temperature to 80°C± 2°C at a rate of 5°C/min, and kept for 30 min; then increased at a rate of 5°C/min, and the temperature was kept for 30 min for every 5°C increase, until the battery failed. The temperature at which the battery began to fail was recorded.

**Table 1: Parameters for preparation of nanocellulose in the examples and comparative examples, parameters of the prepared separator products and performance thereof, and battery performance**

| Serial Number | Separator | Modified nanocellulose preparation process parameters | | | | Separator product parameters | | | | | | Separator performance | | Battery performance |
|---|---|---|---|---|---|---|---|---|---|---|---|---|---|---|
| | | Acid type | Acid concentration (wt%) | Acid treatment time (h) | Times of grinding | Types of modifying groups | Modifying group/hy droxyl group content ratio | Average diameter of nanocellu lose/nm | Length of nanocell ulose/nm | Aspect ratio of nanocellulose | Content of nanocellulose in the coating | Transverse thermal shrinkage rate (150°C, 1h) | Time when the separator leaks current under the conditions of 65°C and 4.3V (days) | Hot box failure temperature (°C) |
| Example 1 | Separator 1 | H₂SO₄ | 40% | 1.2 | 2 | Sulfonic acid group | 2/3 | 35 | 500 | 16.7 | 20% | 1.5% | 13 | 140 |
| Example 2 | Separator 2 | H₂SO₄ | 60% | 1.5 | 2 | Sulfonic acid group | 5/3 | 25 | 500 | 20.0 | 20% | 0.8% | 20 | 148 |
| Example 3 | Separator 3 | H₂SO₄ | 80% | 2.0 | 2 | Sulfonic acid group | 7/3 | 23 | 500 | 21.7 | 20% | 1.3% | 20 | 142 |
| Example 4 | Separator 4 | H₂SO₄ | 80% | 2.5 | 2 | Sulfonic acid group | 8/3 | 20 | 500 | 25.0 | 20% | 2.0% | 20 | 134 |
| Example 5 | Separator 5 | H₂SO₄ | 40% | 1.0 | 2 | Sulfonic acid group | 1/4 | 40 | 500 | 12.5 | 20% | 1.8% | 12 | 138 |
| Example 6 | Separator 6 | H₂SO₄ | 40% | 0.5 | 2 | Sulfonic acid group | 1/5 | 50 | 500 | 10.0 | 20% | 2.3% | 12 | 132 |
| Example 7 | Separator 7 | H₂SO₄ | 75% | 3.0 | 2 | Sulfonic acid group | *5*/*1* | 15 | 500 | 33.3 | 20% | 2.5% | 21 | 130 |
| Example 8 | Separator 8 | H₃PO₄ | 70% | 3.0 | 2 | Phosphoric acid group | 4/3 | 25 | 500 | 20.0 | 20% | 1.2% | 17 | 143 |
| Example 9 | Separator 9 | H₃BO₃ | 7% | 3.0 | 2 | Boric acid group | 4/3 | 25 | 500 | 20.0 | 20% | 1.4% | 17 | 139 |
| Example 10 | Separator 10 | H₂SO₄ | 45% | 2.0 | 5 | Sulfonic acid group | 1/2 | 40 | 400 | 10.0 | 20% | 1.7% | 15 | 137 |
| Example 11 | Separator 11 | H₂SO₄ | 80% | 3.0 | 2 | Sulfonic acid group | 4/1 | 10 | 600 | 60.0 | 20% | 2.1% | 20 | 133 |
| Example 12 | Separator 12 | H₂SO₄ | 60% | 1.5 | 3 | Sulfonic acid group | 5/3 | 25 | 375 | 15.0 | 20% | 1.1% | 19 | 139 |
| Example 13 | Separator 13 | H₂SO₄ | 65% | 3.0 | 4 | Sulfonic acid group | 4/1 | 15 | 450 | 30.0 | 20% | 2.0% | 21 | 140 |
| Example 14 | Separator 14 | H₂SO₄ | 80% | 3.0 | 1 | Sulfonic acid group | 4/1 | 10 | 650 | 65.0 | 20% | 2.8% | 21 | 126 |
| Example 15 | Separator 15 | H₂SO₄ | 75% | 2.0 | 7 | Sulfonic acid group | 3/2 | 25 | 200 | 8.0 | 20% | 2.9% | 19 | 125 |
| Example 16 | Separator 16 | H₂SO₄ | 60% | 1.5 | 2 | Sulfonic acid group | 5/3 | 25 | *500* | 20.0 | 5% | 3.0% | 13 | 128 |
| Example 17 | Separator 17 | H₂SO₄ | 60% | 1.5 | 2 | Sulfonic acid group | 5/3 | 25 | 500 | 20.0 | 8% | 2.3% | 15 | 133 |
| Example 18 | Separator 18 | H₂SO₄ | 60% | 1.5 | 2 | Sulfonic acid group | 5/3 | 25 | *500* | 20.0 | 10% | 1.7% | 18 | 137 |
| Example 19 | Separator 19 | H₂SO₄ | 60% | 1.5 | 2 | Sulfonic acid group | 5/3 | 25 | 500 | 20.0 | 15% | 1.3% | 19 | 143 |
| Example 20 | Separator 20 | H₂SO₄ | 60% | 1.5 | 2 | Sulfonic acid group | 5/3 | 25 | 500 | 20.0 | 25% | 1.2% | 17 | 141 |
| Example 21 | Separator 21 | H₂SO₄ | 60% | 1.5 | 2 | Sulfonic acid group | 5/3 | 25 | 500 | 20.0 | 30% | 2.1% | 15 | 132 |
| Comparative Example 1 | Separator 22 | - | None | None | 2 | None | 0 | 25 | 500 | 20.0 | 20% | 5.0% | 4 | 120 |
| Comparative Example 2 | Separator 23 | CH₃COO H | 60% | 1.5 | 2 | Carboxyl | 6/3 | 25 | 500 | 20.0 | 20% | 4.6% | 10 | 122 |
| Comparative Example 3 | Separator 24 | CO(NH₂) ₂ | 60% | 1.5 | 2 | Amino | 4/3 | 25 | 500 | 20.0 | 20% | 4.5% | 11 | 124 |

As can be seen from Table1, Examples 1-21 use nanocellulose containing specific modifying groups as part of the coating of the separator, which can significantly reduce the thermal shrinkage rate of the separator relative to Comparative Examples 1-3, so that the thermal shrinkage rate of the separator is less than 3% at 150°C in 1 h, and can significantly improve the wetting performance of the separator to the electrolyte solution (under the test conditions, the wetted length of the separator in 1 min is ≥ 20 mm, while the wetted length of the separator of Comparative Example 1 is not more than 5 mm in 1 min, and the wetted length of the separators of Comparative Examples 2-3 is not more than 10 mm in 1 min), and can significantly extend the time when the separator leaks current at 65°C, 4.3V, thereby significantly improving the ion conduction capacity and thermal safety performance of the secondary battery prepared using such separators. As shown in Table 1, the hot box failure temperature of the batteries prepared in Examples 1-21 is generally above 125°C. Especially, by further selecting the content ratio of the modifying groups to the hydroxyl groups in the modified nanocellulose, the diameter, length and aspect ratio of the modified nanocellulose, the content of the modified nanocellulose in the coating and other parameters, the thermal stability of the separator and the thermal safety performance of the battery can be further improved. For example, when the content ratio of the modifying groups to the hydroxyl groups in the modified nanocellulose is 2:3-7:3 and the content of the modified nanocellulose in the coating is in the range of 10-25 wt%, the thermal shrinkage rate of the separator at 150°C in 1 h can be further reduced to less than 1.7%, and the heat box failure temperature of the secondary battery prepared using the separator can be further increased to above 137°C. On the other hand, since the separator provided by the present invention has excellent thermal safety and ion conduction capacity due to the presence of the coating containing modified nanocellulose, the thickness of the substrate of the separator can be reduced to a certain extent, the thickness of the coating can be appropriately reduced, and the energy density of the battery can be further improved while ensuring thermal stability.

Further embodiments of the present invention are provided in the following. It should be noted that the numbering used in the following section does not necessarily need to comply with the numbering used in previous sections.

Embodiment 1. A separator, including:
a porous substrate; and
a coating disposed on at least one surface of the porous substrate, wherein the coating includes nanocellulose, the nanocellulose includes modifying groups, and the modifying groups include at least one of sulfonic acid groups, boric acid groups, and phosphoric acid groups.

Embodiment 2. The separator according to Embodiment 1, wherein the nanocellulose further includes hydroxyl groups, and the content ratio of the modifying groups to the hydroxyl groups is 1:4-4:1, optionally 2:3-7:3.

Embodiment 3. The separator according to Embodiment 1 or 2, wherein the average diameter of the nanocellulose is ≤40 nm; optionally 10-35 nm.

Embodiment 4. The separator according to any one of Embodiments 1-3, wherein the average length of the nanocellulose is 100-600 nm; optionally 200-500 nm.

Embodiment 5. The separator according to any one of claims 1-4, wherein the aspect ratio of the nanocellulose is 5-60; optionally 10-30.

Embodiment 6. The separator according to any one of Embodiments 1-5, wherein the equilibrium degree of polymerization of the nanocellulose is 150-300 DP, optionally 200-250 DP; and/or,
the molecular weight of the nanocellulose is 20000-60000, optionally 30000-50000.

Embodiment 7. The separator according to any one of Embodiments 1-6, wherein the shape of the nanocellulose is selected from one or more of the following: tubular, fibrous, and rod-shaped.

Embodiment 8. The separator according to any one of Embodiments 1-7, wherein the time when the separator leaks current at 65°C and 4.3V is ≥12 days.

Embodiment 9. The separator according to any one of claims 1-8, wherein the content of the nanocellulose in the coating is ≥5 wt%, optionally 10-25 wt%.

Embodiment 10. The separator according to any one of Embodiments 1-9, wherein the coating further includes a filler, and the filler includes at least one of inorganic particles, organic particles and organic-inorganic hybrid particles.

Embodiment 11. The separator according to any one of Embodiments 1-10, wherein
the thickness of the porous substrate is ≤ 12 µm, optionally ≤ 7 µm; and/or,
the thickness of the coating is ≤ 3 µm, optionally 0.5-2 µm.

Embodiment 12. The separator according to any one of Embodiments 1-11, wherein the separator satisfies one or more of (1) - (6) below:
(1) the thermal shrinkage rate of the separator at 150°C in 1 h is ≤5%, optionally 0.5%-3%;
(2) the wetted length of the separator in 1 min is ≥20 mm, optionally 30-80 mm;
(3) the release force of the separator is ≥0.5 N/m, optionally 0.5-100 N/m;
(4) the transverse tensile strength (MD) of the separator is ≥ 2000 kg/cm², and optionally 2500-4500 kg/cm²;
(5) the longitudinal tensile strength (TD) of the separator is ≥ 2000 kg/cm², and optionally 2500-4500 kg/cm²; and
(6) the air permeability of the separator is ≤300 s/100 mL, and optionally 100-230 s/100 mL.

Embodiment 13. The separator according to any one of Embodiments 1-12, wherein at least a part of the surface of the coating is further provided with an adhesive layer, and the adhesive layer includes a granular organic binder; optionally, the granular organic binder includes a polyvinylidene fluoride-based polymer; further optionally, the polyvinylidene fluoride-based polymer includes a homopolymer of vinylidene fluoride monomers and/or includes a copolymer of vinylidene fluoride monomers with other comonomers; further optionally, the other comonomers include fluorine-containing monomers and/or chlorine-containing monomers.

Embodiment 14. A preparation method of the separator according to any one of Embodiments 1-13, wherein the preparation method includes the following steps:
1) providing a porous substrate;
2) providing a coating slurry: mixing the modified nanocellulose in a solvent at a predetermined ratio to prepare into the coating slurry;
3) coating the coating slurry on at least one surface of the substrate, and drying to obtain a separator;
the separator obtained after drying includes: a porous substrate and a coating disposed on at least one surface of the porous substrate, the coating including modified nanocellulose including modifying groups selected from at least one of sulfonic acid groups, boronic acid groups and phosphoric acid groups.

Embodiment 15. The preparation method of the separator according to Embodiment 14, wherein the modified nanocellulose is prepared as follows:
S1: preparing cellulose powder with whiteness ≥ 85%;
S2: mixing and reacting the cellulose powder with an acid solution, then removing acids and impurities to obtain nanocellulose whiskers with modifying groups;
S3: adjusting the pH of the nanocellulose whiskers with modifying groups to neutral, and grinding and cutting the nanocellulose whiskers to obtain the modified nanocellulose.

Embodiment 16. The preparation method of the separator according to Embodiment 15, wherein
in step S1, the alkaline solution is an aqueous NaOH solution, and the concentration of the alkaline solution is 4-20 wt %, optionally 5-15 wt %; and/or
in step S2, the acid solution may be aqueous H₂SO₄ solution, aqueous H₃BO₃ solution, or aqueous H₃PO₄solution, and the concentration of the acid solution is 5-80 wt %; and/or
in step S2, the mass ratio of the cellulose powder to the acid solution is 1:2.5-1:50, optionally 1:5-1:30; and/or
in step S2, the reaction is carried out at a temperature of ≤80°C for 0.5-3 h, optionally 1-2.5 h.

Embodiment 17. A secondary battery, including the separator according to any one of Embodiments 1-13 or a separator prepared by the method according to any one of Embodiments 14-16.

Embodiment 18. An electrical apparatus, including the secondary battery according to Embodiment 17. It should be noted that the present application is not limited to the embodiments above. The above-described embodiments are merely illustrative, and embodiments having substantively the same composition as the technical idea and exerting the same effects within the scope of the technical solution of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A separator, including:
a porous substrate; and
a coating disposed on at least one surface of the porous substrate, wherein the coating includes nanocellulose, the nanocellulose includes modifying groups, and the modifying groups include at least one of sulfonic acid groups, boric acid groups, and phosphoric acid groups; wherein the aspect ratio of the nanocellulose is 5-60.

2. The separator according to claim 1, wherein the nanocellulose further includes hydroxyl groups, and the content ratio of the modifying groups to the hydroxyl groups is 1:4-4:1, optionally 2:3-7:3.

3. The separator according to claim 1 or 2, wherein the average diameter of the nanocellulose is ≤40 nm; optionally 10-35 nm; wherein the average diameter of the nanocellulose is measured as described in the description.

4. The separator according to any one of claims 1-3, wherein the average length of the nanocellulose is 100-600 nm; optionally 200-500 nm, wherein the average length of the nanocellulose is measured as described in the description.

5. The separator according to any one of claims 1-4, wherein the aspect ratio of the nanocellulose is 10-30.

6. The separator according to any one of claims 1-5, wherein
the molecular weight of the nanocellulose is 20000-60000, optionally 30000-50000.

7. The separator according to any one of claims 1-6, wherein the shape of the nanocellulose is selected from one or more of the following: tubular, fibrous, and rod-shaped.

8. The separator according to any one of claims 1-7, wherein the time when the separator leaks current at 65°C and 4.3V is ≥12 days.

9. The separator according to any one of claims 1-8, wherein the content of the nanocellulose in the coating is ≥5 wt%, optionally 10-25 wt%.

10. The separator according to any one of claims 1-9, wherein the coating further includes a filler, and the filler includes at least one of inorganic particles, organic particles and organic-inorganic hybrid particles.

11. The separator according to any one of claims 1-10, wherein
the thickness of the porous substrate is ≤ 12 µm, optionally ≤ 7 µm; and/or,
the thickness of the coating is ≤ 3 µm, optionally 0.5-2 µm.

12. The separator according to any one of claims 1-11, wherein the separator satisfies one or more of (1) - (6) below:
(1) the thermal shrinkage rate of the separator at 150°C in 1 h is ≤5%, optionally 0.5%-3%;
(2) the wetted length of the separator in 1 min is ≥20 mm, optionally 30-80 mm;
(3) the release force of the separator is ≥0.5 N/m, optionally 0.5-100 N/m;
(4) the transverse tensile strength (MD) of the separator is ≥ 2000 kg/cm², and optionally 2500-4500 kg/cm²;
(5) the longitudinal tensile strength (TD) of the separator is ≥ 2000 kg/cm², and optionally 2500-4500 kg/cm²; and
(6) the air permeability of the separator is ≤300 s/100 mL, and optionally 100-230 s/100 mL; wherein the thermal shrinkage rate of the separator, the wetted length, the release force, the transverse tensile strength (MD), the longitudinal tensile strength (TD), and the air permeability are measured as described in the description.

13. The separator according to any one of claims 1-12, wherein at least a part of the surface of the coating is further provided with an adhesive layer, and the adhesive layer includes a granular organic binder; optionally, the granular organic binder includes a polyvinylidene fluoride-based polymer; further optionally, the polyvinylidene fluoride-based polymer includes a homopolymer of vinylidene fluoride monomers and/or includes a copolymer of vinylidene fluoride monomers with other comonomers; further optionally, the other comonomers include fluorine-containing monomers and/or chlorine-containing monomers.

14. A secondary battery, including the separator according to any one of claims 1-13.

15. An electrical apparatus, including the secondary battery according to claim 14.
